Europäisches Patentamt

European Patent Office

Office européen des brevets

(11) Publication number: **0 435 588 A2**

## EUROPEAN PATENT APPLICATION

(21) Application number: **90314063.0**

(22) Date of filing: **20.12.90**

(51) Int. Cl.⁵: **F16L 11/10, F24F 13/24, F02M 35/00**

(30) Priority: **27.12.89 US 457342**
**05.09.90 US 578020**

(43) Date of publication of application:
**03.07.91 Bulletin 91/27**

(84) Designated Contracting States:
**DE FR GB**

(71) Applicant: **CADILLAC RUBBER & PLASTICS, INC.**
**805 West Thirteenth Street**
**Cadillac, Michigan 49601(US)**

(72) Inventor: **Dukes, Glenn**
**9417 37 Mile Road**
**Cadillac, Michigan(US)**
Inventor: **Johnson, Bruce A.**
**436 East Bremmer**
**Cadillac, Michigan(US)**

(74) Representative: **Harrison, David Christopher et al**
**MEWBURN ELLIS 2 Cursitor Street**
**London EC4A 1BQ(GB)**

(54) **Air intake duct and method for making same.**

(57) A unitary duct having sound attenuation and dampening characteristics comprises a reinforced woven fabric liner, an extruded or coated outer layer bonded to the fabric liner, and an end portion bonded to the liner and integral with the outer layer. In addition, a waterproof outer sleeve may be bonded to the end portion such that said sleeve surrounds the outer layer creating an air space between the sleeve and the outer layer. A method for forming the duct comprises the steps of extruding a foamable and vulcanizable cover having sound attenuation qualities over a fabric liner to form a central tubular portion, heating the cover to vulcanize the cover and to bond the cover to the liner, molding at least one end portion to one end of the outer sleeve and one end of the central tubular portion for attaching the duct to a support. Alternatively, the method comprises the steps of coating a relatively thin vulcanizable outer layer having sound attenuation qualities over a fabric liner to form a central tubular portion, heating the outer layer to vulcanize the outer layer and to bond the outer layer to the liner, and molding at least one end portion to one end of the outer sleeve and one end of the central tubular portion for attaching the duct to a support.

# AIR INTAKE DUCT AND METHOD FOR MAKING SAME

This invention relates to an air intake duct and to a method for making the same. More particularly, the invention relates to a waterproof unitary motor vehicle air intake duct having sound attenuation and dampening capabilities.

In response to diminishing reserves of natural resources, automobile manufacturers have been forced to produce motor vehicles of increased fuel efficiency. One technique has been to reduce the size or displacement of the engine while, at the same time, in order to satisfy consumer demands, maintaining comparable levels of engine output or horsepower. One result of this manufacturing trend has been a noticeable increase in engine noise resulting from both the operation of the engine itself and the ducting of fresh air from the air intake to the vehicle air cleaner.

Both the engine noise and the vibrations and resonations generated by air moving through the intake duct radiate into the passenger compartment. Obviously, this creates a situation that is discomforting to the vehicle's passengers, especially on travels of some length. The noise inhibits conversation among passengers; interferes with the enjoyment and use of stereophonic equipment, cellular telephones and mobile citizen band radios; and can distract the attention of the driver from the task at hand.

Many presently known air intake ducts comprise multiple component structures having a central tubular portion that includes a separate outer casing and a separate inner liner, an example of such structure is disclosed in US-A 3,374,856. The individually formed components necessitate separate and distinct storage areas until assembled and require special assembly. Proper fit between the assembled elements requires close manufacturing tolerances.

Other multiple component structures comprise a central tubular portion and separate, mechanically secured ends. However, these structures contribute to noise generation because the separately molded and mechanically secured ends resonate and vibrate. Further, the components are often manufactured of hard thermoplastic materials which inherently vibrate and resonate at a frequency distracting to motor vehicle passengers.

In other instances, the duct may be formed of a single length of massive, dense EPDM rubber. Although this duct is a unitary structure, the duct has limited sound attenuation and dampening characteristics and the ends are difficult to configure in a manner that facilitates assembly to the vehicle.

Thus, there is a need for a unitary duct structure that includes end portions adapted to facilitate assembly onto a vehicle. Further, it would be desirable to provide a unitary duct having sound attenuation and dampening characteristics which also resists water.

The invention relates to a unitary duct having sound attenuation and dampening characteristics. The duct comprises a woven fabric liner, means reinforcing the fabric and an overlayer bonded to the fabric liner. In a preferred embodiment, the duct includes an outer sleeve. The overlayer is formed from either ethylene propylene terpolymer or butadiene acrylonitrile and can include a sponge-like portion bonded to the liner and skin-like surface about the sponge-like portion. The woven fabric may be either polyester or cotton and the reinforcing means may comprise a wire or a nylon monofilament line embedded in the fabric. The outer sleeve is formed of a thermoset elastomeric material such as ethylene propylene terpolymer. The outer sleeve is mounted on and surrounds the overlayer to reduce moisture penetration of the overlayer. The outer sleeve may be mounted on the overlayer such that an air space exists between the overlayer and the outer sleeve. In another embodiment, the duct may further include at least one end portion bonded to the outer sleeve and liner and which is integral with the overlayer.

The invention also relates to a method for forming a unitary duct having sound attenuation and dampening characteristics. The method comprises the steps of extruding a foamable and vulcanizable overlayer having sound attenuation qualities over a fabric liner to form a central tubular portion; heating the cover to provide a foam-like portion and a skin-like surface about the foam-like portion, to vulcanize the overlayer, and to bond the overlayer to the liner; and molding an end portion to at least one end of the central tubular portion to attach the duct to a support. In a preferred embodiment, a sleeve is also molded to the end portion. The end portion can be bonded to the duct and outer sleeve and the fabric liner can be reinforced.

In a second embodiment, the unitary duct comprises a woven fabric liner, means reinforcing the fabric, and an overlayer coated on and bonded to the fabric liner. In a preferred embodiment, an outer sleeve is mounted over the overlayer and radially spaced therefrom. The overlayer is formed from solvated ethylene propylene terpolymer, the woven fabric is polyester, and the reinforcing means comprises a wire or a monofilament line embedded in the fabric. The outer sleeve is formed of a thermoset elastomeric material such as ethylene propylene terpolymer. The outer sleeve is mounted on and surrounds the overlayer to reduce moisture penetration of the overlayer. The outer sleeve is preferably radially spaced from the overlayer such that an air space exists between the overlayer and the outer sleeve. The duct can further include at least one end portion bonded to the outer sleeve and liner which is integral with the overlayer.

The invention also relates to a method for forming a duct. The method comprises the steps of coating a vulcanizable overlayer having sound absorption qualities over a tubular fabric liner to form a central tubular portion; heating the overlayer to vulcanize the overlayer and to bond the overlayer to the fabric liner; and molding an end portion to at least one end of the central tubular portion to a support. Desirably, an outer sleeve is also mounted in spaced relationship to the overlayer. The end portion may be bonded to the duct and outer sleeve and the fabric liner may be reinforced.

The invention will now be described with reference the drawings in which:

FIG. 1 is a plan view of an air intake duct according to the invention and shown in conjunction with an engine for a motor vehicle;

FIG. 2 is a side elevational view of the air intake duct of FIG. 1;

FIG. 3 is a cross-sectional view of the air intake duct taken along lines 3--3 of FIG. 2;

FIG. 4 is a partial longitudinal sectional view of the air intake duct taken along lines 4--4 of FIG. 2;

FIG. 5 is a block diagram flow chart illustrating the method for making the air intake duct according to the invention;

FIG. 6 is a side elevational view of a second embodiment of an air intake duct according to the invention;

FIG. 7 is a cross-sectional view of the second embodiment of the air intake duct taken along lines 7--7 of FIG. 6;

FIG. 8 is a partial longitudinal sectional view of the second embodiment of the air intake duct taken along Lines 8--8 of FIG. 6;

FIG. 9 is a block diagram flow chart illustrating the method for making the second embodiment of the air intake duct according to the invention;

FIG. 10 is a side elevational view of a third embodiment of an air intake duct according to the invention; and

FIG. 11 is a partial longitudinal sectional view of the third embodiment of the air intake duct taken along lines 11--11 of FIG. 10.

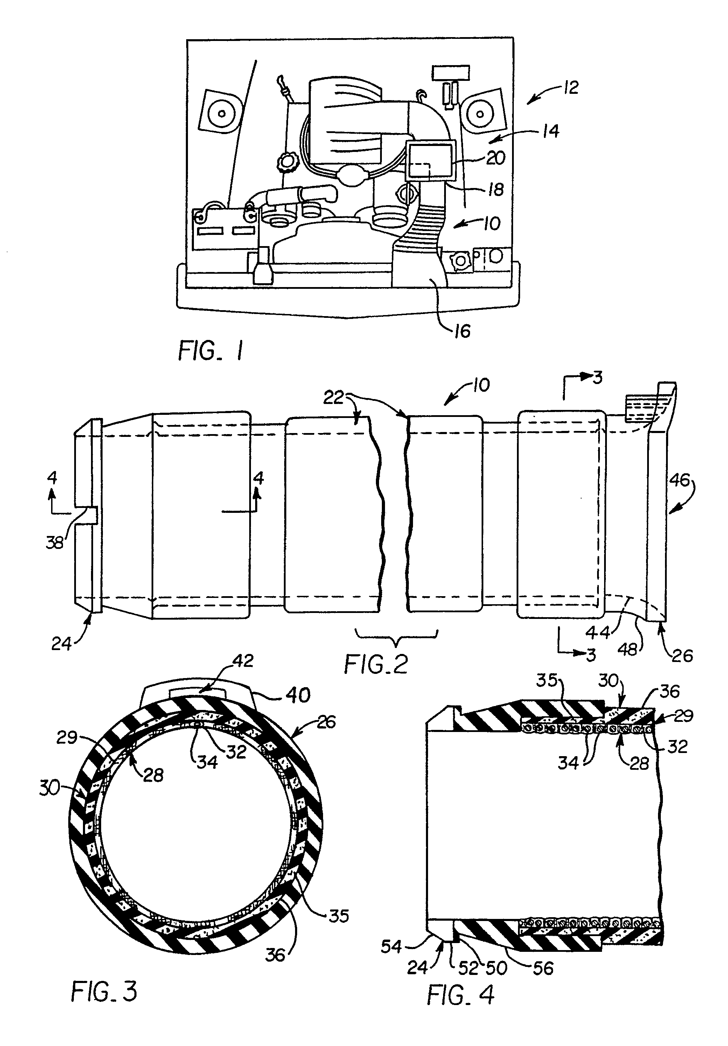

Turning now to the drawings, and in particular FIG. 1, an air intake duct is designated generally by the reference numeral 10 and is shown in conjunction with a conventional motor vehicle 12 having an internal combustion engine 14. One end of the duct 10 is attached to an external air intake 16 for the engine 14 while the opposite end is secured to an inlet 18 for a conventional engine air cleaner assembly 20.

In operation, air is drawn into the engine 14 through the external air intake 16 and ducted through the duct 10 to the inlet 18 for the air cleaner assembly 20. The air is passed through a filter (not shown separately in the drawings) housed in the air cleaner assembly 20 to remove undesirable particulate matter or other filterable impurities and then fed to a carburetor (not shown separately in the drawings) where it is mixed with fuel for combustion. The vehicle 12, the engine 14, the external air intake 16, and the air cleaner assembly 20 form no part of the invention and are shown merely for the purpose of illustrating a typical environment in which the duct 10 may find use.

Referring now to FIGS. 2 to 4, the duct 10 comprises a central, tubular portion 22 and means for mounting the tubular portion 22 to a support such as the engine 14. The mounting means is shown in the form of a pair of integrally molded end portions 24, 26 bonded to opposite ends of the tubular portion 22. The central tubular portion 22 includes an inner layer 28 and an overlayer 30.

The inner layer or hose liner 28 is formed of spun polyester yarn 32 woven with a circular weave and includes means for reinforcing the woven polyester yarn 32. Alternatively, cotton yarn could be used but polyester yarn, because of its greater durability, is preferred. The reinforcing means is shown in the form of steel wire 34 although other reinforcing means such as nylon monofilament line may be used. The polyester yarn is woven on a conventional commercial weaving machine with the reinforcing means embedded in the woven fabric and coiled about the finished hose liner 28. The reinforcing means increases the strength and flexibility of the hose liner 28.

After the hose liner 28 is formed, it is placed on a stationary mandrel, passed over the mandrel, and through a crosshead for an extruder die. As the hose liner 28 passes through the crosshead, the outer layer or overlayer 30, a sponge thermoset compound, is extruded over the hose liner. The overlayer 30 is then vulcanized using any of the common industrial processes such as a salt bath, heat treatment, microwave exposure, or compression. Vulcanization securely bonds the overlayer 30 to the hose liner 28.

The overlayer 30 may be formed of a thermoset elastomer, such as ethylene propylene terpolymer (EPDM) or butadiene acrylonitrile (NBR), formulated with any of a variety of well known blowing agents that are activated upon vulcanization to provide a sponge-like or foam-like portion 35 of the overlayer 30. Vulcanization also results in the formation of a very thin, skin-like surface 36 about the sponge-like portion 35. Heat generated by the vulcanization process rapidly cures the exterior of the overlayer 30 and forms the skin 36 before the blowing agents are activated. The skin-like surface 36 has the properties of dense EPDM or NBR rubber. Because the hose liner 28 is closely woven, the extruded thermoset compound is bonded to an exterior surface 29 of the liner 28 rather than encapsulating the hose liner. A unitary structure is created.

The end portions 24, 26 are substantially identical and comprise dense EPDM rubber that is injection splice molded and vulcanized to opposite ends of the already formed central tubular portion 22. The preferred embodiment utilizes dense EPDM rubber with a specific gravity in excess of .90. The central tubular portion 22, once formed, is transferred to a separate rubber press having molds for forming the end portions 24, 26. Alternatively, a single rubber press having molds for the overlayer 30 and the end portions 24, 26 can be utilized. As well, the vulcanization of the overlayer 30 and the end portions 24, 26 can be carried out simultaneously.

The end portions 24, 26 are molded such that they are in contact with and bonded to both the overlayer 30 and the hose liner 28. That is, the end portions are vulcanized to both the extruded thermoset compound that comprises the overlayer 30 and the reinforced polyester yarn that comprises the hose liner 28, although, as shown in FIG. 4, sponge-like portion 35 of the overlayer 30 remains as a distinct layer. Because the end portions 24, 26 are molded to the overlayer 30, it is desirable that those sections of the hose cover to which the end portions are to be molded be contained during the vulcanization process to limit the expansion of the hose cover upon activation of the blowing agents.

The end portion 24 is molded with a pair of diametrically opposed rectangular slots 38, although only one is shown in the drawings. Similarly, the end portion 26 is provided with an integral tab 40 having an opening 42 therethrough. The slots 38 and the tab 40 provide means for facilitating attachment of the duct 10 to the vehicle 12. A durometer in the range of 80-85 is preferred for the end portions 24 and 26.

The duct end portion 26, as shown, is formed to be the air intake end, that is, that end which is mounted to the external air intake 16 for the vehicle 12. The end portion 26 is molded with a radiused inner wall 44 to provide an outwardly flared opening 46 that facilitates flow of air into the duct. An outer wall 48 of the end portion 26 is similarly radiused to maintain a uniform wall thickness.

The end portion 24, as shown, is adapted for attachment to the vehicle engine air cleaner assembly 20. The body of the air cleaner assembly 20 (not shown separately in the drawings) engages a shoulder 50 of the duct end 24. A flat retention surface 52 and the shoulder 50 function to securely mount the duct 10 to the air cleaner assembly 20. A flanged surface 54 provides a lead in surface for the air cleaner assembly 20 for easy attachment of the duct 10 to the assembly. A ramped surface 56 situated behind the shoulder 50 allows for a sealing engagement of the duct 10 to air cleaner assembly 20.

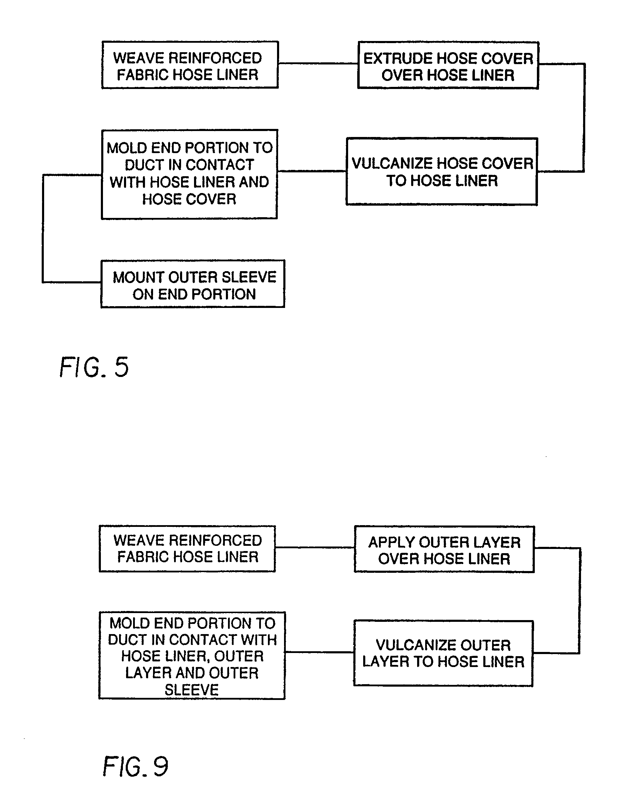

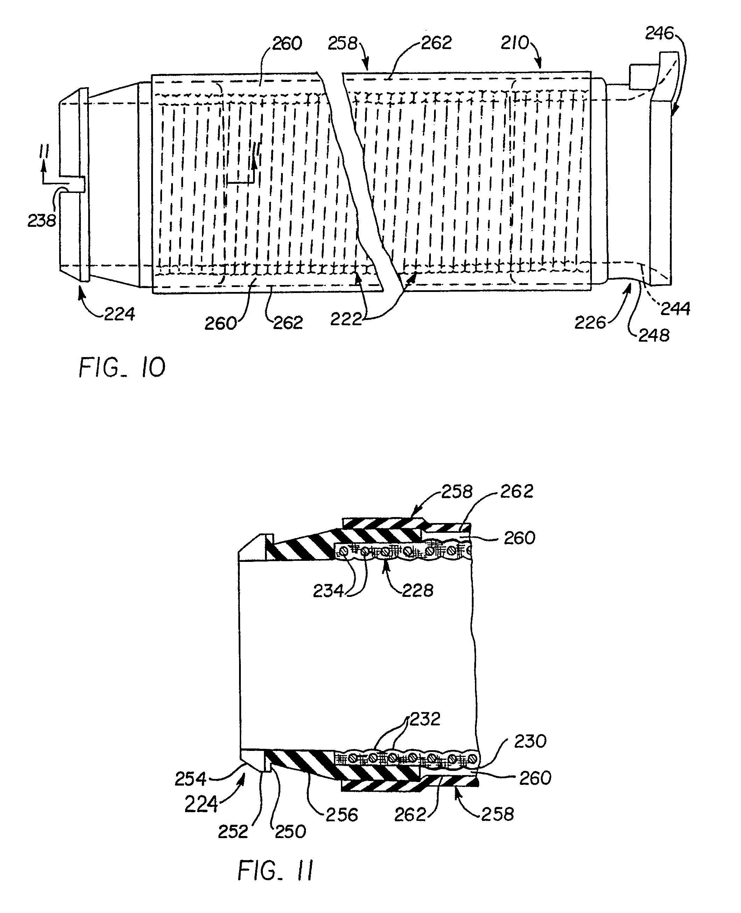

Thus, it can be seen that a unitary air intake duct 10 has been provided. As illustrated in FIG. 5, the overlayer 30 is extruded over and vulcanized to the reinforced hose liner 28 to provide the central tubular portion 22. The end portions 24, 26 are molded and vulcanized to the central tubular portion 22 and in contact with both the overlayer 30 and the hose liner 28. Unlike those structures that are presently known, the intake duct 10 according to the invention has integrally bonded, molded on end portions rather than separate mechanically secured end portions. Because the end portions 24, 26 are molded on, they do not vibrate or resonate with respect to the central tabular portion 22 when the vehicle engine is under power, unlike those ducts that are presently known. As described more fully below in the third embodiment, an outer sleeve 258 (FIG. 10) can be mounted on the end portion by slipping the sleeve over the end portion such that it surrounds the hose liner and hose cover. It should be noted, the outer sleeve 258 can also be molded and vulcanized directly to the end portions to create a unitary structure. This process is described more fully below.

The duct 10 has sound insulating characteristics enabling it to attenuate and dampen the vibrations and resonations generated by both the vehicle engine 14 and air moving through the duct 10 between the external air intake 16 and the air cleaner assembly 20. Resonations and vibrations are attenuated or dampened because of the diffusion, absorption and barrier properties of the duct. In the first instance, sound pressure waves emanating from within the hollow interior of the duct 10 (as a result of both engine noise sound pressure waves and air propagating through the duct) are dispersed or diffused by the coarse polyester fabric 32 comprising the hose liner 28.

In the second instance, as the dispersed and diffused sound waves continue to radiate outward relative to the interior of the duct 10, they are substantially absorbed by the massive, open cell structure of the sponge or foam-like portion 35 of the overlayer 30. The thin skin 36 about the sponge-like portion 35 serves as a barrier to the sound pressure previously absorbed by the sponge-like portion of the overlayer 30, further diminishing the noise or sound pressure being added to the engine compartment.

As noted hereinabove, the end portions 24, 26, because they are molded and vulcanized to both the hose liner 28 and the overlayer 30, do not vibrate or resonate relative to the central tubular portion 22. The end portions 24, 26 also function as a barrier to the propagation of noise or sound pressure from within the duct 10.

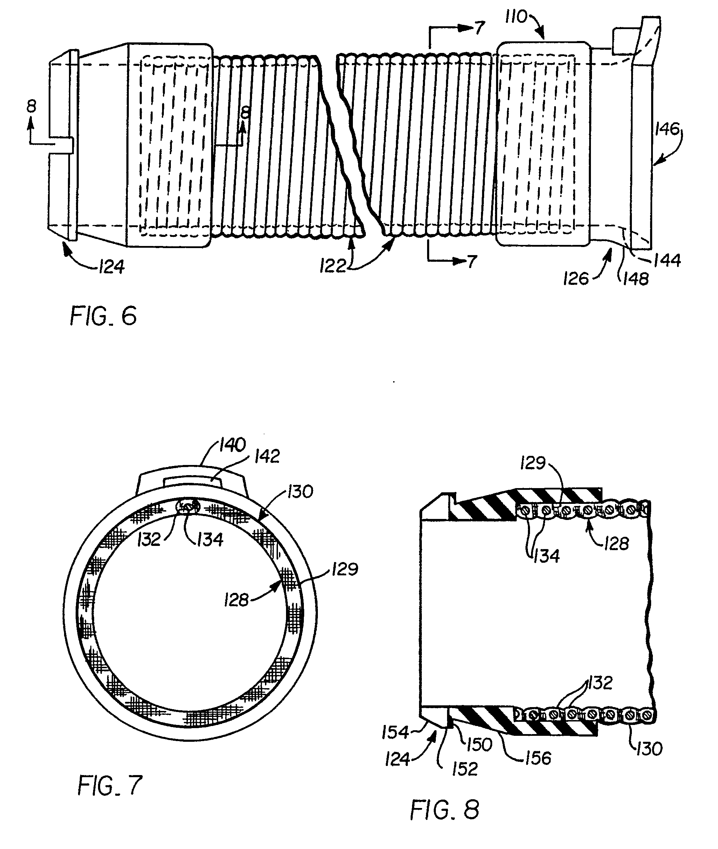

FIGS. 6 to 8 disclose a second embodiment of a unitary duct having sound attenuation and dampening characteristics. The second embodiment is similar in some respects to the first embodiment disclosed in FIGS. 2 to 4 and analogous components have been identified by reference numerals corresponding to those used in the FIGS. 2 to 4 but which have been increased by 100. It will be understood that the duct of FIGS. 6 to 8 would be employed in a manner similar to the duct of the first embodiment as shown in FIG. 1. Although FIG. 1 describes only the first embodiment of the invention, it applies equally to the second embodiment of the invention as well.

Thus, FIGS. 6 to 8 disclose a duct 110 that comprises a central tubular portion 122 and a pair of integrally molded end portions 124 and 126 for mounting the central tubular portion to a support such as the engine 14 (FIG. 1). The central, tubular portion 122 includes an inner layer or hose liner 128 formed of spun polyester yarn 132 woven with a circular weave and reinforced with a steel wire 134 embedded in the woven fabric and coiled about the finished hose liner. Although not shown separately in the drawings, a nylon monofilament line can be substituted for the steel wire 134. The hose liner 128 of the second embodiment is substantially similar to the hose liner 28 of the first embodiment except that yarn having approximately 30% more mass is employed in the second embodiment, the significance of which is explained below.

After the hose liner 128 is formed, an overlayer 30 formed of a thermoset elastomeric compound, preferably EPDM, is applied. The EPDM rubber is compounded and then mixed with a straight chain hydrocarbon solvent to liquify the rubber. Opposite ends of the hose liner 128 are capped to seal the interior and the liner is dipped in the solvated EPDM rubber, thereby coating the liner with the rubber compound to provide the overlayer 130. The rubber compound is absorbed to only very slight degree by the woven fabric 132 of the liner 128. The surface of the overlayer 130 can be made more uniform by employing a circular scrapping machine (not shown) and then pulled through a flash-off chamber (not shown) to remove any solvent from the overlayer 130, but these steps are optional. The overlayer 130 is then cured or vulcanized by heated air to securely bond the outer layer to an exterior surface 129 of the hose liner 128. The solvent is evaporated by the vulcanization process or may be evaporated in a separate, preceding step. A unitary structure is created. Preferably, the hose liner 128 is dipped in solvated EPDM having a viscosity of approximately 35 seconds. Viscosity measurements were obtained in accordance with a standard viscosity testing procedure, ASTM D-1084, Test Method A, fourth cup.

The end portions 124 and 126 are substantially identical to the end portions 24 and 26 of the first embodiment and comprise dense EPDM rubber that is injection splice molded and vulcanized to opposite ends of the already formed central tubular portion 122. The preferred embodiment utilizes dense EPDM rubber with a specific gravity in excess of .90. The end portions 124 and 126 are formed in a separate rubber press having molds therefore. The end portion 126 is provided with a radiused inner wall 144, an outwardly flared opening 146, and a radiused outer wall 148. The end portion 124 includes a shoulder 150, a flat retention surface 152, a flanged surface 154, and a ramped surface 156.

The end portions 124 and 126 are molded such that they are in contact with and bonded to both the overlayer 130 and the hose liner 128. That is, the end portions are vulcanized to both the EPDM rubber compound of the overlayer 130 and the reinforced polyester yarn that comprises the hose liner 128, the rubber from which the end portions are formed, permeating and chemically bonding with the overlayer 130 such that the outer layer lacks the distinctness that it possesses in the first embodiment.

As in the first embodiment, the end portion 124 is provided with a pair of diametrically opposed rectangular slots 138 (although only one is shown) and the end portion 126 includes an integral tab 140 having an opening 142 therethrough, the slots and the tab providing means for facilitating attachment of the duct 110 to the motor vehicle 12 (see FIG. 1).

Thus, it can be seen that the second embodiment of FIGS. 6 to 8 also provides a unitary air intake duct 110. As illustrated schematically in FIG. 9, the overlayer 130 is extruded over and vulcanized to the reinforced hose liner 128 to provide the central tubular portion 122. The end portions 124, 126 are molded and vulcanized to the outer sleeve 258 (FIG. 10) and the central tubular portion 122 and in contact with both the overlayer 130 and the hose liner 128. Unlike those structures that are presently known, the intake duct 110 has integrally bonded, molded on end portions rather than separate mechanically secured end portions. Because the end portions 124, 126 are molded on, they do not vibrate or resonate with respect to the central tubular portion 122 when the vehicle engine is under power.

The duct 110 has sound insulating characteristics enabling it to attenuate and dampen the vibrations and resonations generated by both the vehicle engine 14 and air moving through the duct 110 between the external air intake 16 and the air cleaner assembly 20 (see FIG. 1). Resonations and vibrations are attenuated or dampened because of the diffusion and absorption properties of the duct. In the first instance, sound pressure waves emanating from within the hollow interior of the duct 110 (as a result of both engine noise sound pressure waves and air propagating through the duct) are dispersed or diffused by the coarse polyester fabric 132 comprising the hose liner 128. Because the duct of the second embodiment employs fabric of greater mass than does the duct of the first embodiment, the hose liner 128 of the duct 110 has enhanced dispersion or diffusion capabilities, relative to the hose liner 28 of the duct 10.

In the second instance, as the dispersed and diffused sound waves continue to radiate outward relative to the interior of the duct 110, they are substantially absorbed by the porous structure of the overlayer 130. The overlayer 30 of the duct 10, because it has a foam-like or sponge-like quality, has a more porous or open cell structure than the overlayer 130 of the duct 110. Thus, the overlayer 30 has superior sound absorption capabilities relative to the overlayer 130.

As noted hereinabove, the end portions 124, 126, because they are molded and vulcanized to both the hose liner 128 and the overlayer 130, do not vibrate or resonate relative to the central tubular portion 122. The end portions 124, 126 also function as a barrier to the propagation of noise or sound pressure from within the duct 110.

FIGS. 10 and 11 illustrate a third embodiment of a unitary duct having sound attenuation and dampening characteristics which has the added advantage of being waterproof. The third embodiment incorporates an outer sleeve 258 to either of the previously disclosed first (FIGS. 2 to 4) or second (FIGS. 6 to 8) embodiments. FIGS. 10 and 11 show the outer sleeve 258 incorporated on the second embodiment as seen in FIGS. 6 to 8. Analogous components have been identified by reference numerals corresponding to those used in FIGS. 6 and 8 but which have been increased by 100. It will be understood that the duct of FIGS. 10 and 11 would be employed in a manner similar to the duct of the first embodiment as shown in FIG. 1. Although FIG. 1 describes only the first embodiment of the invention, it applies equally to the second embodiment and the third embodiment of the invention as well.

FIGS. 10 and 11 disclose a duct 210 that comprises a central tubular portion 222 and a pair of integrally molded end portions 224 and 226 for mounting the central tubular portion to a support such as the engine 14 (FIG. 1). The central, tubular portion 222 includes an inner layer or hose liner 228 formed of spun polyester yarn 232 woven with a circular weave and reinforced with a steel wire 234 embedded in the woven fabric and coiled about the finished hose liner. Although not shown separately in the drawings, a nylon monofilament line can be substituted for the steel wire 234.

The hose liner 228 is formed as described earlier including the creation of an overlayer 230 formed of a thermoset elastomeric compound, preferably EPDM. The end portions 224 and 226 are substantially identical to the end portions 24 and 26 of the first embodiment and 124 and 126 of the second embodiment. These end portions comprise dense EPDM rubber that is injection spliced molded and vulcanized to opposite ends of the already formed central tubular portion 222. The preferred embodiment utilizes dense EPDM rubber with a specific gravity in excess of .90. The end portions 224 and 226 are formed in a separate rubber press having molds therefor. The end portion 226 is provided with a radiused inner wall 244, an outwardly flared opening 246, and a radiused outer wall 248. The end portion 224 includes a shoulder 250, a flat retention surface 252, a flanged surface 254, and a ramped surface 256.

The end portions 224 and 226 are molded such that they are in contact with and bonded to both the overlayer 230 and the hose liner 228. That is, the end portions are vulcanized to both the EPDM rubber compound of the overlayer 230 and the reinforced polyester yarn that comprises the hose liner 228, the rubber from which the end portions are formed, permeating and chemically bonding with the overlayer 230 such that the outer layer lacks the distinctiveness that it possesses in the first embodiment.

As in the first and second embodiments, the end portion 224 is provided with a pair of diametrically opposed rectangular slots 238 (although only one is shown) and the end portion 226 includes an integral tab 240 having an opening 242 therethrough, the slots and the tab providing means for facilitating attachment of the ducted 210 to the motor vehicle 12 (see FIG. 1).

As seen in FIGS. 10 and 11, the outer sleeve 258 surrounds all of the central tubular portion 222 of the air intake duct 210 and a portion of the ends of the duct 224 and 226. The outer sleeve 258 is preferably constructed of an elastic, pliable and water-resistant material such as low modulus EPDM rubber. The preferred embodiment incorporates a modulus wherein a load of 600 lb.

achieves 100% elongation. The sleeve may be installed by one of the following methods. In the first instance, the outer sleeve 258 is circular in cross-section and has a diameter slightly less than the portion of the ends 224 and 226 of the duct 210 which it contacts. The sleeve may be easily installed by slipping the sleeve over the central tubular portion 222 after one of the ends 224 or 226 has been molded or attached thereto. After the second end, 224 or 226 has been attached to the central tubular portion 222, the sleeve may be slipped over the appropriate portion of the end. In this case, a tight bond will be achieved between the surfaces of the ends 224 and 226 and the outer sleeve 258.

A second method for installing the sleeve 258 is to mold and vulcanize the end portions 124 and 126 to the ends of the sleeve and the hose liner 228 and overlayer 230 by an injection splice molding process as described earlier (FIG. 9). Thereafter, the structure is vulcanized to obtain an airtight or near airtight bonding between the ends of the sleeve 258 and the ends of the duct 224 and 226.

Depending upon how the outer sleeve 258 is installed on the duct 210, an air space 260 can be created between an interior face 262 of the outer sleeve and the overlayer 230 of the tubular portion or the interior face 262 can be in contact with the overlayer 230. Incorporating an air space has been found to further enhance the sound attenuation characteristics achieved in the first (FIGS. 2-4) and second embodiments (FIGS. 6-8) depending upon the properties desired in the duct. In addition, use of a water resistant material such as EPDM rubber for the construction of the outer sleeve 258 provides waterproof protection for the central tubular portion 222 of the duct 210.

As stated above, the outer sleeve 258 can be incorporated on either the first embodiment (FIGS. 2-4) or the second embodiment (FIGS. 6-8) depending upon the properties desired in the duct. The outer sleeve 258 can be mounted on the end portion by slipping the sleeve over the tubular portion and end, as described in FIG. 5, or it can be molded directly to the end portion as described in FIG. 9. In addition, the sleeve can be designed such that an air space exists between the inner surface of the sleeve and the outer surface of the central tubular portion. The air space 260 will provide enhanced sound attenuation characteristics while the sleeve provides a waterproof barrier protecting the central tubular portion from the environment.

The performance characteristics of the ducts of the first, second and third embodiments differ somewhat and the embodiment of choice will depend on the objectives to be achieved. The duct 10 of the first embodiment includes a thin skin 36 having the properties of dense EPDM rubber about the overlayer 30. As noted hereinabove, the skin 16 functions as a barrier to the propagation of sound pressure not absorbed by the sponge-like portion 35 of the overlayer 30. The unabsorbed sound pressure waves are reflected into the hollow interior of the duct 10 and propagate to the duct ends. The duct 10 emits less noise overall than the duct 110. Very slight levels of noise or sound pressure are passed through the overlayer 30 of the central tubular portion 22 of the duct 10 because of the barrier properties of the thin skin 36. However, the reflected sound pressure waves result in a higher level of noise at opposite ends of the duct 10 relative to the duct 110.

The duct 110, on the other hand, lacks the skin 36 and, as a result, sound pressure not absorbed by the overlayer 130 is added to the engine compartment. Thus, in comparison to the duct 10, the duct 110 contributes more noise to the engine compartment but results in less noise at the opposite ends of the duct.

The duct 210 further enhances the sound attenuation properties of both duct 10 of the first embodiment and duct 110 of the second embodiment. If an outer sleeve were incorporated on the first embodiment, any noise or sound pressure which passes through the overlayer 30 of the central tubular portion 22 of the duct 10 is further muffled when it encounters the air space 260 and the interior face of the outer sleeve 262. Regardless of the incorporation of an air space, the barrier properties of the outer sleeve 258 will help retain the noise or sound pressure within the duct 210.

Similarly, incorporation of the outer sleeve 258 on the second embodiment results in enhanced sound attenuation of the duct 210. Noise and sound pressure not absorbed by the overlayer 230 enters the air space 260 and encounters the interior face 262 of the sleeve 258. Regardless of the incorporation of an air space, the barrier properties of the sleeve 258 further frustrate the ability of the noise or sound pressure to enter the engine compartment. Whether it is desirable to have more or less noise in the engine compartment or more or less noise at the ends of the duct depends on the particular objective to be achieved.

## Claims

1. A unitary duct having sound attenuation and dampening characteristics comprising: a woven fabric liner (28), means (34) reinforcing the woven fabric liner (28), and a thin sound absorbing, layer (130) coated on and bonded to the fabric liner (28).

2. A unitary duct having sound attenuation and dampening characteristics comprising: a woven fabric liner (28), means (34) reinforcing the fabric liner (28), a sound absorbing layer (30) bonded to the liner (28), and at least one end portion (24) bonded to the fabric liner (28) and the sound absorbing layer (30), said end portion (24, 26) being adapted to mount the duct to a support.

3. A unitary duct having sound attenuation and dampening characteristics comprising: a woven fabric liner (28), means (34) reinforcing the woven fabric liner (28), and an extruded elastomeric sound absorbing layer (30) bonded to the fabric liner (28) wherein the sound absorbing layer (30) is formed of ethylene propylene terpolymer.

4. A duct according to claim 1 wherein the sound absorbing layer (30) includes a sponge-like portion (35) bonded to the fabric liner (28) and a skin-like surface (36) about the sponge-like portion (35).

5. A duct according to claims 1-4 wherein the woven fabric liner (28) is selected from the group consisting of polyester and cotton.

6. A duct according to claims 1-5 wherein the reinforcing means (34) comprises a wire embedded in the fabric liner (28).

7. A duct according to claims 1-5 wherein the reinforcing means (34) comprises a nylon monofilament line embedded in the fabric liner (28).

8. A duct according to claims 1,3 or 4 including means (24, 26) for attachment to a motor vehicle to provide air intake means therefor.

9. A duct according to claims 1-8 and further comprising an outer sleeve (258) which surrounds said sound absorbing layer (30) and is mounted on the attachment means (24, 26) to reduce moisture penetration of the sound absorbing layer (30) and to enhance sound attenuation properties.

10. A duct according to claim 9 wherein said outer sleeve (258) is radially spaced from the sound absorbing layer (30, 130) to provide an air space (260) between the outer sleeve (258) and the sound absorbing layer (30, 130).

11. A duct according to claim 10 wherein the outer sleeve (258) is formed of a thermoset elastomeric material.

12. A duct according to claim 11 wherein the thermoset elastomeric material is ethylene propylene terpolymer.

13. A duct according to claim 1,2 or 5 to 12 wherein the sound absorbing layer (130) is formed of a thermoset elastomeric material.

14. A duct according to claim 13 wherein the thermoset elastomeric material is ethylene propylene terpolymer.

15. A duct according to claims 1,2 or 5 to 14 wherein the sound absorbing layer (30, 130) is extruded over the fabric liner (28).

16. A duct according to claims 1,2 or 5 to 15 wherein the sound absorbing layer (30) includes a sponge-like portion (35) bonded to the fabric liner (28) and a skin-like surface (36) about the sponge-like portion (35).

17. A duct according to claim 16 wherein the sound absorbing layer is formed of a material selected from the group consisting of ethylene propylene terpolymer and butadiene acrylonitrile.

18. A duct according to claim 2 wherein the end portion (24) is formed of ethylene propylene terpolymer.

19. A duct according to claim 2 wherein the end portion (24) includes a pair of slots (38).

20. A duct according to claim 2 wherein the end portion (26) includes a tab (40) integral with the end portion, said tab (40) having a portion defining an opening (42) therethrough.

21. A duct according to claims 1,2 or 5 to 20 wherein the sound absorbing layer (130) is relatively thin and coated on the fabric liner (28).

22. A duct according to claim 21 wherein the sound absorbing layer (130) is formed from solvated ethylene propylene terpolymer.

23. A method for forming a unitary duct having sound attenuation and dampening characteristics comprising the steps of:
extruding a foamable and vulcanizable over layer (30) having sound attenuation qualities over a fabric liner (28) to form a central tubular portion (22);

heating the overlayer (30) to provide a foam portion (35) and a skin (36) about the foam portion (35), to vulcanize the overlayer (30) and to bond the foamable and vulcanizable layer (30) to the fabric liner (28);

molding an end portion (24, 26) to at least one end of the central tubular portion (22), for attaching the duct to a support.

24. A method for forming a unitary duct having sound attenuation and dampening characteristics comprising the steps of:

coating a vulcanizable overlayer (130) having sound absorption qualities over a fabric liner (128) to form a central tubular portion (122);

heating the overlayer (130) to vulcanize the overlayer (130) and to bond the overlayer (130) to the fabric liner (128); and

molding an end portion (124, 126) to at least one end of the central tubular portion (122), for attaching the duct to a support.

25. A method for forming a unitary duct according to claims 23 or 24 wherein the fabric liner (28) is reinforced.

26. A method for forming a unitary duct according to claim 23 or 24 wherein the end portion (24, 26) is bonded to the end of the central tubular portion (22).

27. A method for forming a unitary duct according to claim 23-26 and further comprising the step of molding an outer sleeve (258) to the end portion (24, 26) such that the sleeve (258) surrounds the overlayer (30, 130).

28. A method for forming a unitary duct according to claim 27 wherein the outer sleeve (258) is radially spaced from the overlayer (30, 130) to provide an air space (260) between the overlayer (30, 130) and the outer sleeve (258).

29. A method for forming a unitary duct according to claim 24 wherein the overlayer (130) is coated on the fabric liner (128) by dipping the liner (128) in a solvated solution of the material comprising the overlayer (130).

FIG. 1

FIG. 2

FIG. 3

FIG. 4

```
┌─────────────────────┐        ┌─────────────────────┐
│  WEAVE REINFORCED   │────────│  EXTRUDE HOSE COVER │──┐
│  FABRIC HOSE LINER  │        │   OVER HOSE LINER   │  │
└─────────────────────┘        └─────────────────────┘  │
                                                         │
┌─────────────────────┐        ┌─────────────────────┐  │
│  MOLD END PORTION TO│        │                     │  │
│   DUCT IN CONTACT   │        │ VULCANIZE HOSE COVER│  │
│  WITH HOSE LINER AND│────────│    TO HOSE LINER    │──┘
│     HOSE COVER      │        │                     │
└─────────────────────┘        └─────────────────────┘
   │
   │
┌─────────────────────┐
│ MOUNT OUTER SLEEVE  │
│   ON END PORTION    │
└─────────────────────┘
```

## FIG. 5

```
┌─────────────────────┐        ┌─────────────────────┐
│  WEAVE REINFORCED   │────────│  APPLY OUTER LAYER  │──┐
│  FABRIC HOSE LINER  │        │   OVER HOSE LINER   │  │
└─────────────────────┘        └─────────────────────┘  │
                                                         │
┌─────────────────────┐        ┌─────────────────────┐  │
│  MOLD END PORTION TO│        │                     │  │
│ DUCT IN CONTACT WITH│        │   VULCANIZE OUTER   │  │
│  HOSE LINER, OUTER  │────────│ LAYER TO HOSE LINER │──┘
│  LAYER AND OUTER    │        │                     │
│      SLEEVE         │        └─────────────────────┘
└─────────────────────┘
```

## FIG. 9

FIG. 6

FIG. 7

FIG. 8

FIG. 10

FIG. 11